# EUROPÄISCHE PATENTSCHRIFT

(11) **EP 2 193 074 B1**
(45) Veröffentlichungstag und Bekanntmachung des Hinweises auf die Patenterteilung: **03.08.2011**
(21) Anmeldenummer: 07847914.4
(22) Anmeldetag: 06.12.2007
(51) Int. Cl.: B63H 5/125, B63H 20/10

(54) **VERFAHREN ZUM STEUERN EINES WASSERFAHRZEUGS MIT EINEM OBERFLÄCHENANTRIEB**
METHOD FOR STEERING A WATERCRAFT HAVING A SURFACING PROPULSION UNIT
PROCEDE DE COMMANDE D'UN BATEAU EQUIPE D'UNE PROPULSION DE SURFACE

(30) Priorität: 05.10.2007 DE 102007048060
(43) Veröffentlichungstag der Anmeldung: 09.06.2010
(73) Patentinhaber: ZF Friedrichshafen AG, 88038 Friedrichshafen (DE)
(72) Erfinder: CHIECCHI, Andrea, I-37129 Verona (IT)
(74) Vertreter: Paul, Andreas
(86) Internationale Anmeldenummer: PCT/EP2007/063439
(87) Internationale Veröffentlichungsnummer: WO 2009/046770

(56) Entgegenhaltungen:
- WO-A-99/22989
- US-A- 4 544 362
- US-A1- 2004 139 903

## Beschreibung

Die Erfindung betrifft ein Verfahren zum Steuern eines Wasserfahrzeugs mit einem Oberflächenantrieb nach dem Oberbegriff von Anspruch 1.

Bei schnellen motorgetriebenen Wasserfahrzeugen, insbesondere solchen mit einem Oberflächenantrieb, befindet sich der Schiffsrumpf bei höheren Geschwindigkeiten im Gleitzustand und liegt nur noch zu einem geringen Teil heckseitig im Wasser. Bei einer Kurvenfahrt und der damit verbundenen Schräglage des Wasserfahrzeugs verlagert sich die Kontaktstelle mit dem Wasser auf die Seitenfläche der Unterseite des Schiffsrumpfes wodurch sich die Kraftangriffsverhältnisse des Fahrwiderstandes am Schiffsrumpf ändern und ein Moment erzeugen. Ab einem kritischen Steuerwinkel und dem daraus resultierenden engen Kurvenradius ist ab einer bestimmten Geschwindigkeit das entstehende Moment so hoch, dass das Wasserfahrzeug aus seiner Bahn gedreht wird und kentern kann.

Der Oberflächenantrieb eines Wasserfahrzeugs besteht aus mindestens einer Antriebseinheit, deren Schubkraft durch eine Steuereinrichtung, die sich im Wesentlichen aus einem eine Propellerwelle führenden Schubrohr und einer Steuer- und Trimmaktuatorik zusammensetzt in ihrer Richtung verändert wird. Das Schubrohr ist über einen Gelenkpunkt schwenkbar mit dem Heck des Wasserfahrzeuges und der Antriebswelle, welche direkt vom Motor kommt oder von einem dem Motor nachgeschalteten Getriebe, verbunden. Außerdem wird das Schubrohr von der Trimmaktuatorik in einer vertikalen und, zum Herbeiführen einer Richtungsänderung des Wasserfahrzeugs, von der Steueraktuatorik in einer horizontalen Schwenkebene bewegt. Die maximale Bewegungsfreiheit in den beiden Ebenen wird durch einen maximal einstellbaren Steuerwinkel und einen Trimmbereich beschrieben. Das Maß für die jeweilige Verschwenkung ist der Steuerwinkel und der Trimmwinkel. Die Ansteuerung der Steuer- und Trimmaktuatorik erfolgt über eine elektronische Steuerungseinheit, in welche auf elektronischem Wege das vom Schiffsführer gewünschte Steuerwinkelsignal eingeht. Die Einstellung des Trimmwinkels kann wahlweise in einer automatischen Betriebsart geschwindigkeits- bzw. drehzahlabhängig erfolgen. Um zu große Steuerwinkel bei hohen Geschwindigkeiten zu vermeiden, wird die Geschwindigkeit des Wasserfahrzeuges und der Steuerwinkel in der elektronischen Steuerungseinheit erfasst und in Abhängigkeit davon selbsttätig ein reduzierter maximal einstellbarer Steuerwinkel festgesetzt. Bei einer Verringerung der Geschwindigkeit wird der Steuerbereich wieder entsprechend vergrößert.

Bei hohen Geschwindigkeiten in Verbindung mit einem engen Kurvenradius, bzw. großem Steuerwinkel, nimmt das Wasserfahrzeug eine starke Schräglage ein, wobei der beschriebene instabile Fahrzustand noch nicht erreicht sein muss. Allerdings besteht bei einem Oberflächenantrieb, der aus mindestens zwei Antriebseinheiten besteht, ab einer kritischen Schräglage die Möglichkeit, dass der Propeller der kurvenäußeren Antriebseinheit nicht mehr im Wasser läuft. Aufgrund der nicht vorhandenen oder stark reduzierten Verdrängung des Propellers sinkt die Last und die Drehzahl steigt an. Die automatische Trimmregelung kann diesen Zustand nicht ausregeln, da die beiden Antriebseinheiten mechanisch gekoppelt sind und die Verbindung nur geringe Verschränkungen der Antriebseinheiten zulässt.

Aus der JP 02-279495 ist ein System bekannt, bei welchem bei einem Außenbordantrieb der maximal einstellbare Steuerwinkel mit zunehmender Geschwindigkeit mechanisch reduziert wird.

Die US 6843195 B2 beschreibt ein Steuersystem für einen Au ßenbordmotor, bei welchem der Quotient "realisierter Lenkwinkel/über das Steuerruder eingegebener Lenkwinkel" mit steigender Geschwindigkeit abnimmt, so dass mit steigender Geschwindigkeit eine Drehung am Steuerrad am Außenbordantrieb eine geringere Änderung des Steuerwinkels bewirkt wie bei niedrigen Geschwindigkeiten. Darüber hinaus wird ein Verfahren zur Begrenzung des maximal einstellbaren Steuerwinkels in Abhängigkeit von der Drehzahl bzw. der Geschwindigkeit offenbart.

Beide Systeme beziehen sich nur auf Außenbordmotoren, deren Propeller- und Steueranordnung stark von der eines Oberflächenantriebs abweicht.

Aus der US 4,544,362, die als nächsliegender stand der Technik angesehen wird, ist ein Verfahren zum Steuern eines Wasserfahrzeugs mit einem mindestens zwei Antriebseinheiten umfassenden Oberflächenantrieb bekannt, der um einen Steuerwinkel schwenkbar ist. Dabei wurden die Antriebseinheiten in vertikaler Richtung in einer voreinstellbaren automatischen Betriebsart um einen Trimmwinkel verstellt, wobei der Oberflächenantrieb in mindestens zwei Fahrbereichen betrieben wird.

Die der Erfindung zugrunde liegende Aufgabe ist es, ein Verfahren zum Steuern eines Oberflächenantriebs mit mindestens zwei Antriebseinheiten für die Kurvenfahrt im oberen Geschwindigkeitsbereich anzugeben.

Diese Aufgabe wird durch die Merkmale des Patenanspruchs 1 gelöst.

In einem Verfahren zum Steuern eines Wasserfahrzeuges ist ein Antrieb zur Herbeiführung einer Richtungsänderung des Wasserfahrzeuges um einen Steuerwinkel schwenkbar. Der Steuerwinkel ist nur bis zu einem maximal einstellbaren Steuerwinkel veränderbar, welcher in einem vorgegebenen Verlauf mit steigender Geschwindigkeit selbsttätig verkleinert wird. In einer Ausführung des Antriebs als Oberflächenantrieb, wird dieser in mindestens zwei Fahrbereichen betrieben und besteht aus mindestens zwei Antriebseinheiten, welche in vertikaler Richtung in einer voreinstellbaren automatischen Betriebsart um einen Trimmwinkel verstellt werden. In einem Fahrbereich, in welchem das Wasserfahrzeug seine Höchstgeschwindigkeit erreicht, verlässt erfindungsgemäß bei einer Überschreitung eines in eine elektronischen Steuerungseinheit definierten ersten Grenzsteuerwinkels, welcher kleiner ist als der maximal einstellbare Steuerwinkel, die automatische Einstellung des Trimmwinkels die selbsttätige Betriebsart und schaltet in eine Standby-Betriebsart. Die Einstellung des Trimmwinkels muss nun manuell vorgenommen werden, da aufgrund der Schräglage des Wasserfahrzeugs in der Kurvenfahrt ab dem ersten Grenzsteuerwinkel der kurvenäußeren Propeller nicht mehr im Wasser läuft und die automatische Einstellung des Trimmwinkels die Drehzahlabweichung nicht mehr ausregeln kann. Die Standby-Betriebsart bleibt so lange bestehen, bis ein zweiter Grenzsteuerwinkel wieder unterschritten wird und damit die elektronische Steuerungseinheit die selbsttätige Einstellung des Trimmwinkels wieder aktiviert.

Vorteilhafte Ausgestaltungen der Erfindung ergeben sich aus den Unteransprüchen.

In Weiterbildung des erfindungsgemäßen Verfahrens ist der zu überschreitende erste Grenzsteuerwinkel größer ist als der zu unterschreitende zweite Grenzsteuerwinkel. Durch die Hysterese wird ein häufiges Umschalten zwischen automatischer Einstellung des Trimmwinkels und Standby-Betriebsart bei Steuerwinkeln im Bereich des ersten Grenzsteuerwinkels vermieden.

Schließlich wird als vorteilhaft beurteilt, dass sowohl die Grenzsteuerwinkel als auch der maximal einstellbare Steuerwinkel abhängig von der Geschwindigkeit bzw. der Drehzahl sind und aus einer in der elektronischen Steuerungseinheit abgelegten Wertetabelle oder Kennlinie ermittelt oder nach einer mathematischen Funktion errechnet werden.

Bevorzugt sind die Fahrbereiche jeweils durch eine obere und untere Drehzahlgrenze oder durch eine obere und untere Geschwindigkeitsgrenze des Wasserfahrzeugs definiert, wobei sich die Drehzahl auf die eines Motors, eines Antriebsstrangs oder einer Propellerwelle bezieht.

Außerdem kann gemäß der Erfindung vorgesehen sein, dass der maximal einstellbare Steuerwinkel in einem ersten Fahrbereich, der von einer ersten Drehzahlgrenze bis zu einer zweiten Drehzahlgrenze reicht, noch nicht reduziert ist und mit zunehmender Geschwindigkeit in weiteren Fahrbereichen linear abnimmt.

Es ist in einer Variante möglich, dass der maximal einstellbare Steuerwinkel in einem ersten Fahrbereich, der von einer ersten Drehzahlgrenze bis zu einer zweiten Drehzahlgrenze reicht, noch maximal ist und in jedem der mit steigender Geschwindigkeit folgenden Fahrbereiche, in welchen jeweils die selbsttätige Einstellung des Trimmwinkels nach einer anderen Betriebsart erfolgt, der maximal einstellbare Steuerwinkel in jedem Fahrbereich konstant bleibt und sich beim Übergang zum nächst schnelleren Fahrbereich verringert. Hierdurch entsteht über den gesamten Betriebsbereich mit steigender Drehzahl bzw. Geschwindigkeit eine treppenförmige Abnahme des maximal einstellbaren Steuerwinkels.

Ein Ausführungsbeispiel der Erfindung ist in der Zeichnung dargestellt und wird im Folgenden näher beschrieben.

Es zeigen
- Fig. 1:: eine schematische Darstellung der Seitenansicht eines Wasserfahrzeugs mit einem Oberflächenantrieb,
- Fig. 2:: eine schematische Darstellung der Draufsicht auf ein Was- serfahrzeug mit einem Oberflächenantrieb,
- Fig. 3:: ein Diagramm mit dem Verlauf des Trimmwinkels über der Drehzahl und
- Fig. 4:: ein Ablaufdiagramm der Schaltvorgänge im Fahrbereich S4.

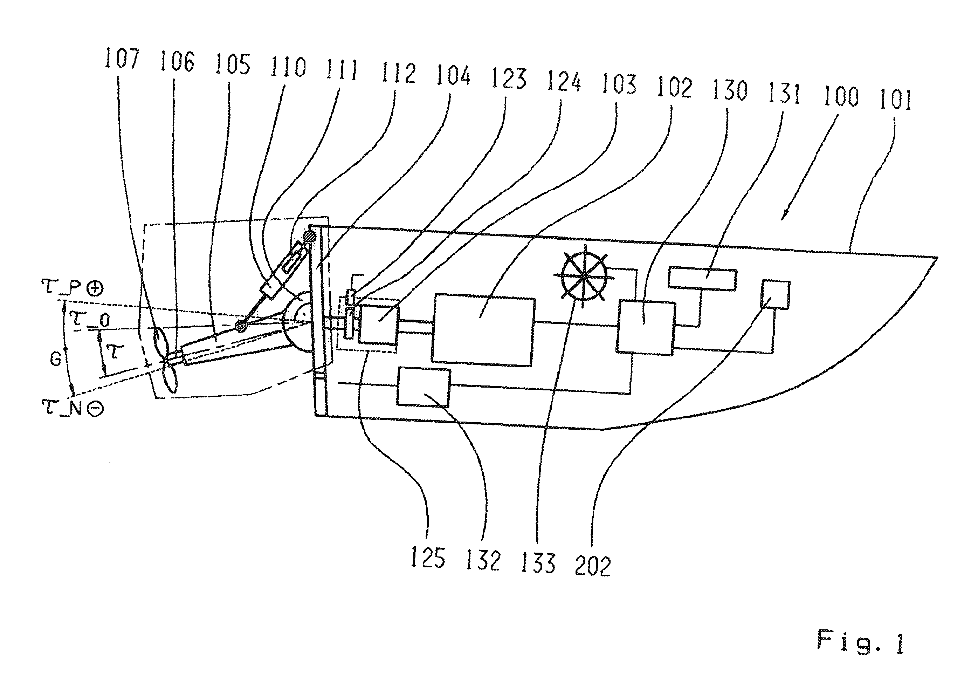

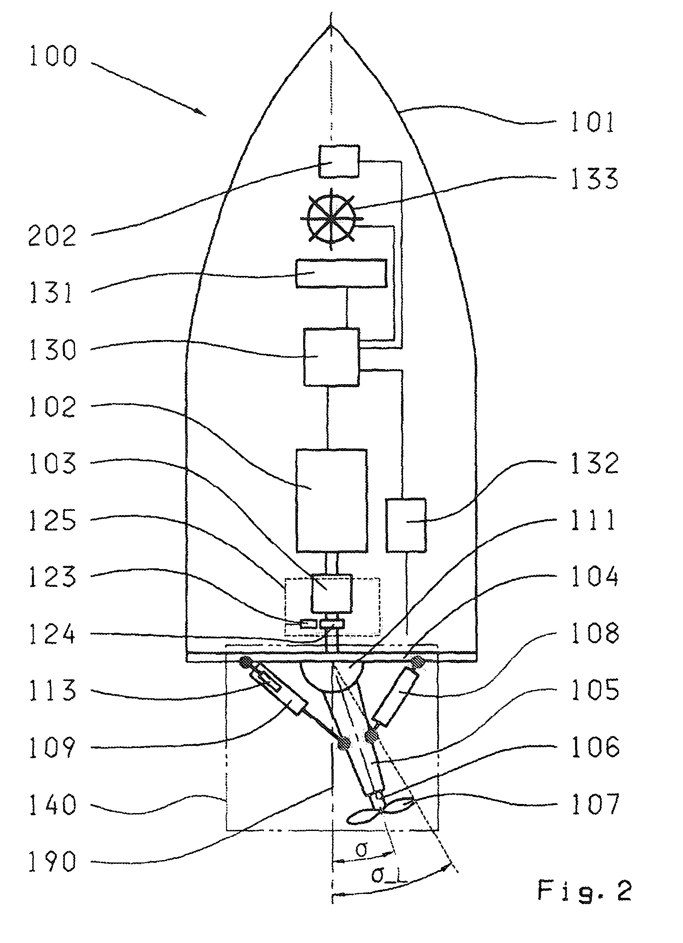

Fig. 1 und 2 zeigen ein Wasserfahrzeug 100 mit Oberflächenantrieb. Die Antriebseinheit 140 des Oberflächenantriebs ist heckseitig am Rumpf 101 des Wasserfahrzeugs 100 angeordnet und mit dem Heckspiegel 104 verbunden. Die Antriebseinheit 140 besteht aus dem Schubrohr 105 mit der Propellerwelle 106 und dem Propeller 107 sowie der Steueraktuatorik 108, 109 und der Trimmaktuatorik 110. In dem Schubrohr 105 ist mittig die Propellerwelle 106, an deren heckseitigem Ende der Propeller 107 befestigt ist, drehbar gelagert. In dem Gelenkpunkt 111 ist das Schubrohr 105 mit dem Heckspiegel 104 und die Propellerwelle 106 mit dem Antriebsstrang 125, der vom Motor 102 ausgeht, verbunden und schwenkbar gelagert. Der Antriebsstrang 125 beinhaltet ein Getriebe 103. Die Drehzahl n wird beispielsweise von einem Drehzahlsensor 123 an einer Schlitzscheibe 124 gemessen, dessen Signal von der elektronischen Steuerungseinheit 130 erfasst wird. Die Schwenkbewegung in horizontaler Ebene, auch als Steuerbewegung bezeichnet, wird ausgehend von einem Steuer 133 über die elektronische Steuerungseinheit 130 und die zentrale Hydraulikeinheit 132, die von der elektronischen Steuerungseinheit 130 angesteuert wird, von der aus zwei hydraulisch betätigten Zylindern 108 und 109 bestehenden Steueraktuatorik bewirkt. Die Schwenkbewegung in vertikaler Ebene, auch als Trimmbewegung bezeichnet, wird ausgehend von einem Bedienpult 131 über die elektronische Steuerungseinheit 130 und die zentrale Hydraulikeinheit 132 mittels der aus dem hydraulisch betätigten Trimmzylinder 110 und einem Hubsensor 112 bestehenden Trimmaktuatorik bewirkt. Die Steuerbewegung erfolgt innerhalb eines maximal einstellbaren Steuerwinkels σ_L, gemessen von der Längsachse der horizontalen Ebene 190 aus, wie aus Fig. 2 ersichtlich ist. Das Maß für die Steuerbewegung der Antriebseinheit 140 ist der Steuerwinkel σ, der von der Längsachse 190 aus als neutraler Steuerwinkel σ_0 = 0° aus gemessen wird. Das Maß für die Trimmbewegung der Antriebseinheit 140 ist der Trimmwinkel τ. Die Trimmbewegung erfolgt innerhalb eines als Trimmbereich τ_G bezeichneten, durch eine obere Trimmgrenze τ_P und eine untere Trimmgrenze τ_N begrenzten, Winkels. Die neutrale Trimmlage τ_0, welche mit τ_0 = 0° definiert ist, ist in der Seitenansicht durch die Senkrechte auf den Heckspiegel 104 gegeben.

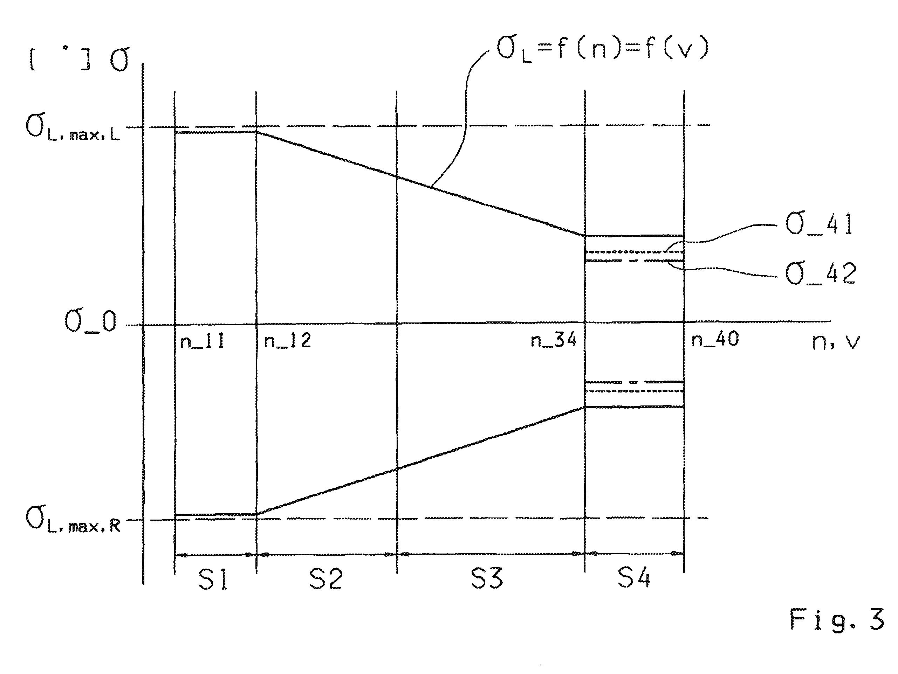

Das Diagramm in Fig. 3 zeigt ein Beispiel für den Verlauf des maximal einstellbaren Steuerwinkels σ_L über der Drehzahl n, bzw. über der sich proportional zur Drehzahl n verhaltenden Geschwindigkeit v. Auf der Ordinate des Diagramms ist der Steuerwinkel σ aufgetragen, die durchgezogene Linie gibt den Verlauf des maximal einstellbaren Steuerwinkels σ_L über der Drehzahl n bzw. der Geschwindigkeit v wieder. Der Steuerwinkel σ_L kann von der Drehzahl n_0 = 0 1/min, bzw. dem Stillstand des Wasserfahrzeugs, bis zu einer Drehzahlgrenze n_12 am Ende des Langsamfahrt-Bereich S1 bis auf seinen, gestrichelt dargestellten, linken oder rechten Höchstwert σ_L,max,L und σ_L,max,R verstellt werden. Ab der Drehzahlgrenze n_12, bzw. dem Beginn eines Fahrbereichs S2 wird der maximal einstellbare Steuerwinkel σ_L gemäß einer in der elektronischen Steuerungseinheit 130 abgelegten Funktion bzw. einer Wertetabelle oder Kennlinie, innerhalb derer Werte interpoliert werden können, reduziert. Eine Überschreitung des maximal einstellbaren Steuerwinkels o_L ist auch bei abgeschalteter automatischer Einstellung des Trimmwinkels nicht möglich. Im einem ab der Drehzahlgrenze n_34 beginnenden Fahrbereich S4, in dem der maximal einstellbare Steuerwinkel σ_L aufgrund der hohen Geschwindigkeit, bzw. Drehzahl, zur Vermeidung instabiler Fahrzustände am geringsten ist, liegt unterhalb des maximal einstellbaren Steuerwinkels σ_L der Verlauf eines ersten Grenzsteuerwinkels σ_41. Eine Überschreitung des ersten Grenzsteuerwinkels σ_41 löst zunächst ein optisches und / oder akustisches Signal für den Schiffsführer aus. Bei weiterer Vergrößerung des Steuerwinkels σ schaltet die elektronische Steuerungseinheit in eine Standby-Betriebsart 300 , in welcher die automatische Regelung des Trimmwinkels τ abgeschaltet und dessen Trimmung wieder so lange manuell vorgenommen werden muss, bis der Steuerwinkel σ so weit verringert wird, dass dieser kleiner als ein zweiter Grenzsteuerwinkel σ_42 ist. Die beiden Grenzsteuerwinkel σ_41 und σ_42 können gleich sein. Um ein ständiges Hin- und Herschalten zu vermeiden, schafft man eine Hysterese und wählt den ersten Grenzsteuerwinkel σ_41 für die Überschreitung größer wie den zweiten Grenzsteuerwinkel σ_42, bei dessen Unterschreitung die automatische Regelung des Trimmwinkels τ im Fahrbereich S4 wieder aktiv wird. Im beschriebenen Beispiel sind die Grenzsteuerwinkel σ_41 und σ_42 im Fahrbereich S4 konstant, ebenso der maximal mögliche Steuerwinkel σ_L. Allerdings ist für beide Größen jeder beliebige Verlauf in Abhängigkeit von Drehzahl n oder Geschwindigkeit denkbar, da sowohl der maximal mögliche Steuerwinkel σ_L als auch der erste und zweite Grenzsteuerwinkel σ_41 und σ_42 nach einer in der elektronischen Steuerungseinheit 130 abgelegten Wertetabelle oder Kennlinie, oder einer mathematischen Funktion, gesteuert werden. Die Kennlinien, Wertetabellen oder Funktionen wurden beispielsweise anhand von Versuchen aufgestellt, in welchen z.B. im Falle des Grenzsteuerwinkels σ_41 ermittelt wurde, ab welchem Steuerwinkel σ bei einer konstanten Geschwindigkeit v der kurvenäußere Propeller nicht mehr im Wasser lief. Die Grenzsteuerwinkel σ_41 und σ_42 sind wie in dem Diagramm dargestellt für links und rechts gleich, können aber auch theoretisch unterschiedlich sein, falls dies aus Gründen der Geometrie des Wasserfahrzeugs erforderlich ist.

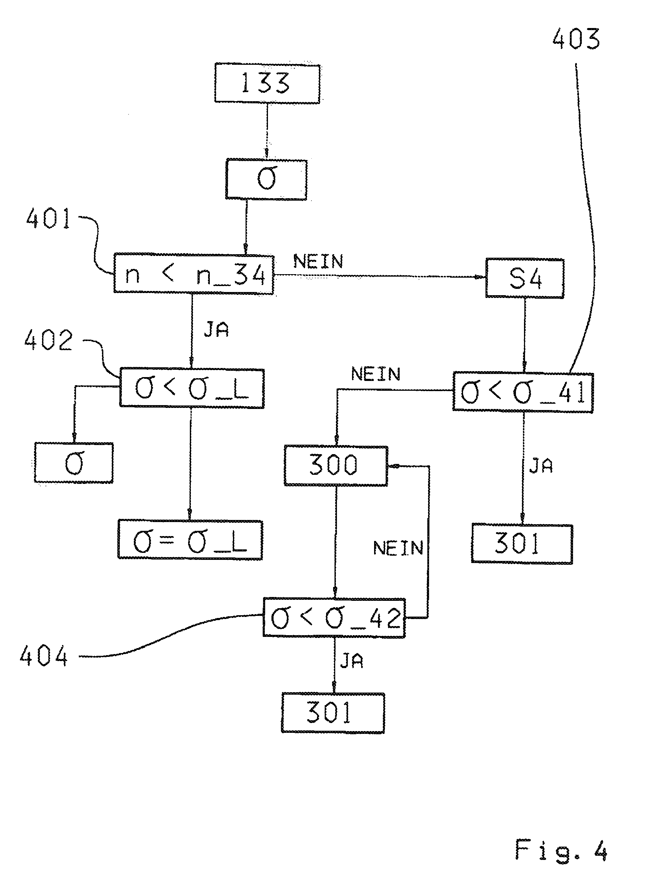

Fig. 4 zeigt ein Ablaufdiagramm der Schaltvorgänge im Fahrbereich S4. Ausgehend von einer Betätigung des Steuers 133 soll ein gewünschter Steuerwinkel σ eingestellt werden. In der elektronischen Steuerungseinheit 130 wird die aktuelle Drehzahl n mit der Drehzahlgrenze n_34 verglichen und so der Fahrbereich mit der zugehörigen Betriebsweise ermittelt. Ist die Drehzahl n kleiner als die Drehzahlgrenze n_34, wie in einem Schritt 401 verglichen wird, so kann der gewünschte Steuerwinkel σ nur eingestellt werden wenn er bei dem Vergleich in einem Schritt 402 kleiner ist als der der aktuellen Drehzahl n zugehörige maximal einstellbare Steuerwinkel σ_L, ansonsten nimmt der Steuerwinkel σ den Wert des maximal einstellbaren Steuerwinkels σ_L an. In beiden Fällen bleibt die automatische Betriebsart 301 zur Einstellung des Trimmwinkels τ bestehen. Ist die Drehzahl n größer als die Drehzahlgrenze n_34, ist die Betriebsart für den Fahrbereich S4, in welchem das Wasserfahrzeug seine Höchstgeschwindigkeit erreicht, gültig. Ist der gewünschte Steuerwinkel σ in einem Vergleichsschritt 403 kleiner als der Grenzsteuerwinkel σ_41, bleibt die automatische Betriebsart 301 zur Einstellung des Trimmwinkels τ aktiv. Überschreitet der Steuerwinkel σ den ersten Grenzsteuerwinkel σ_41, schaltet die elektronische Steuerungseinheit in eine Standby-Betriebsart 300, in welcher der Trimmwinkel τ manuell eingestellt werden muss, da bei einer Überschreitung des ersten Grenzsteuerwinkels σ_41 die automatische Einstellung des Trimmwinkels den Drehzahlanstieg des kurvenäußeren Antriebs bei Austritt des kurvenäußeren Propellers aus dem Wasser nicht ausregeln kann. Unterschreitet der Steuerwinkel σ in einem Vergleichsschritt 404 den zweiten Grenzsteuerwinkel σ_42, wird die automatische Einstellung des Trimmwinkels wieder aktiv, andernfalls bleibt die Standby-Betriebsart 300 und damit die manuelle Einstellung bestehen.

### Bezugszeichen

- 100: Wasserfahrzeug
- 101: Rumpf
- 102: Antriebsmotor
- 103: Getriebe
- 104: Heckspiegel
- 105: Schubrohr
- 106: Propellerwelle
- 107: Propeller
- 108: Steuerzylinder rechts
- 109: Steuerzylinder links
- 110: Trimmzylinder
- 111: Gelenkpunkt
- 112: Hubsensor Trimmzylinder
- 113: Hubsensor Steuerzylinder
- 123: Drehzahlsensor Propellerwelle
- 124: Schlitzscheibe
- 125: Antriebsstrang
- 130: elektronische Steuerungseinheit
- 131: Bedienpult
- 132: zentrale Hydraulikeinheit
- 133: Steuer
- 140: Antriebseinheit
- 190: Längsachse
- 202: Geschwindigkeitsmesseinrichtung
- 300: Standby-Betriebsart
- S1: Langsamfahrtbereich
- S4: Fahrbereich in dem die Höchstgeschwindigkeit erreicht wird
- n: Drehzahl
- n_11: Anfangsdrehzahl von S1
- n_12: zweite Drehzahlgrenze
- n_34: Drehzahlgrenze nach S4
- n_40: Maximale Drehzahl von S4
- v: Geschwindigkeit des Wasserfahrzeugs
- v_40: Höchstgeschwindigkeit des Wasserfahrzeugs
- σ: Steuerwinkel
- σ_L: maximal einstellbarer Steuerwinkel links, rechts, f(n)
- σ_L,max,L: Maximalwert des einstellbaren Steuerwinkels, links
- σ_L,max,R: Maximalwert des einstellbaren Steuerwinkels, rechts
- σ_0: neutrale Lage des Steuerwinkels
- σ_41: erster Grenzsteuerwinkel im Fahrbereich S4
- σ_42: zweiter Grenzsteuerwinkel im Fahrbereich S4
- τ: Trimmwinkel
- τ_P: obere Trimmgrenze
- τ_N: untere Trimmgrenze
- τ_0: mittlere Lage des Trimmwinkels
- τ_G: Trimmbereich

## Patentansprüche

1. Verfahren zum Steuern eines Wasserfahrzeuges mit einem Antrieb welcher um einen Steuerwinkel schwenkbar ist und ein maximal einstellbarer Steuerwinkel (σ_L) in einem vorgegebenem Verlauf mit steigender Geschwindigkeit selbsttätig verkleinert wird, **dadurch gekennzeichnet, dass** der Antrieb als Oberflächenantrieb mit mindestens zwei Antriebseinheiten (140) ausgeführt ist, welche in vertikaler Richtung in einer voreinstellbaren automatischen Betriebsart (301) um einen Trimmwinkel (τ) verstellt werden, wobei der Oberflächenantrieb in mindestens zwei Fahrbereichen betrieben wird, und wobei in einem Fahrbereich (S4), in welchem die Höchstgeschwindigkeit er reicht wird, bei Überschreitung eines ersten Grenzsteuerwinkels (σ_41), welcher kleiner ist als der maximal einstellbare Steuerwinkel (o_L), die Einstellung des Trimmwinkels (τ) ihre automatische Betriebsart (301) verlässt und in eine Standby-Betriebsart (300) geht, in welcher die Einstellung des Trimmwinkels (τ) manuell vorgenommen werden muss, bis ein zweiter Grenzsteuerwinkel (σ_42) wieder unterschritten und damit die automatische Betriebsart (301) der Trimmwinkeleinstellung wieder aktiviert wird.

2. Verfahren zum Steuern eines Wasserfahrzeugs nach Anspruch 1,
**dadurch gekennzeichnet, dass** der zu überschreitende erste Grenzsteuerwinkel (σ_41) größer ist als der zu unterschreitende zweite Grenzsteuer winkel (σ_42).

3. Verfahren zum Steuern eines Wasserfahrzeugs nach Anspruch 1,
**dadurch gekennzeichnet, dass** sowohl die Grenzsteuerwinkel als auch der maximal einstellbare Steuerwinkel (σ_L) abhängig von der Geschwindigkeit (v) bzw. der Drehzahl (n) sind und aus einer in der elektronischen Steuerungseinheit (130) abgelegten Wertetabelle oder Kennlinie ermittelt oder nach einer mathematischen Funktion errechnet werden.

4. Verfahren zur Steuerung eines Antriebs für ein Wasserfahrzeug nach Anspruch 1 **dadurch gekennzeichnet, dass** die Fahrbereiche jeweils durch eine obere und untere Drehzahlgrenze oder durch eine obere und untere Geschwindigkeitsgrenze des Wasserfahrzeugs (100) definiert sind, wobei sich die Drehzahl (n) auf die eines Motors (102), des Antriebsstrangs (125) oder der Propellerwelle (106) bezieht.

5. Verfahren zum Steuern eines Wasserfahrzeugs nach Anspruch 1,
**dadurch gekennzeichnet, dass** der maximal einstellbare Steuerwinkel (o_L) in einem ersten Fahrbereich (S1), der von einer ersten Drehzahlgrenze bis zu einer zweiten Drehzahlgrenze reicht, noch nicht reduziert ist und mit zunehmender Geschwindigkeit (v) bzw. Drehzahl (n) in weiteren Fahrbereichen linear reduziert wird.

6. Verfahren zum Steuern eines Wasserfahrzeugs nach Anspruch 1,
**dadurch gekennzeichnet, dass** der maximal einstellbare Steuerwinkel (σ_L) in einem ersten Fahrbereich (S1) noch maximal ist und in jedem der mit steigender Geschwindigkeit folgenden Fahrbereiche, in welchen jeweils die selbsttätige Einstellung des Trimmwinkels (τ) nach einer anderen Betriebsart erfolgt, der maximal einstellbare Steuerwinkel (σ_L) in jedem Fahrbereich konstant bleibt und sich beim Übergang zum nächst schnelleren Fahrbereich ver ringert.

## Claims

1. Method for controlling a watercraft having a propulsion system which can be pivoted through a control angle, and a maximum control angle (σ_L) which can be set is automatically reduced with a predefined profile as the speed increases, **characterized in that** the propulsion system is in the form of a surface propulsion system having at least two propulsion units (140) which are adjusted by a trimming angle (τ) in the vertical direction in a presettable automatic operating mode (301), with the surface propulsion system being operated in at least two speed ranges, and with, in a speed range (S4) in which the maximum speed is reached, the setting of the trimming angle (τ) leaving its automatic operating mode (301) and entering a standby operating mode (300), in which the trimming angle (τ) has to be set manually, when a first limit control angle (σ_41) which is smaller than the maximum control angle (σ_L) which can be set is exceeded, until a second limit control angle (σ_42) is undershot again and therefore the automatic operating mode (301) of the trimming angle setting is re-activated.

2. Method for controlling a watercraft according to Claim 1, **characterized in that** the first limit control angle (σ_41) which is to be exceeded is greater than the second limit control angle (σ_42) which is to be undershot.

3. Method for controlling a watercraft according to Claim 1, **characterized in that** both the limit control angle and the maximum control angle (σ_L) which can be set are dependent on the speed (v) or the rotation speed (n) and are ascertained from a table of values or characteristic curve which is stored in the electronic control unit (130) or are calculated using a mathematical function.

4. Method for controlling a propulsion system for a watercraft according to Claim 1, **characterized in that** the speed ranges are in each case defined by an upper and lower rotation speed limit or by an upper and lower speed limit of the watercraft (100), with the rotation speed (n) relating to that of a motor (102), of the drive train (125) or of the propeller shaft (106).

5. Method for controlling a watercraft according to Claim 1, **characterized in that** the maximum control angle (σ_L) which can be set in a first speed range (S1), which extends from a first rotation speed limit to a second rotation speed limit, is not yet reduced and is reduced in a linear fashion in further speed ranges as the speed (v) or rotation speed (n) increases.

6. Method for controlling a watercraft according to Claim 1, **characterized in that** the maximum control angle (σ_L) which can be set in a first speed range (S1) is still the maximum, and the maximum control angle (σ_L) which can be set in each speed range remains constant in each of the speed ranges which follow as the speed increases and in which in each case the automatic setting of the trimming angle (τ) takes place in accordance with a different operating mode, and falls as it moves to the next-faster speed range.

## Revendications

1. Procédé de commande d'un bateau comprenant un entraînement qui peut pivoter autour d'un angle de commande et dans lequel un angle de commande ajustable au maximum (σ_L) est automatiquement réduit dans une avance prédéfinie avec vitesse croissante, **caractérisé en ce que** l'entraînement est réalisé sous forme d'entraînement de surface avec au moins deux unités d'entraînement (140), qui sont déplacées dans la direction verticale dans un mode de fonctionnement automatique pré-ajustable (301) suivant un angle d'assiette (τ), l'entraînement de surface fonctionnant dans au moins deux plages de conduite, et dans une plage de conduite (S4), dans laquelle la vitesse maximale est atteinte, en cas de dépassement d'un premier angle de commande limite (σ_41) qui est inférieur à l'angle de commande ajustable au maximum (σ_L), l'ajustement de l'angle d'assiette (τ) quitte son mode de fonctionnement automatique (301) et entre dans un mode de fonctionnement de veille (300), dans lequel l'ajustement de l'angle d'assiette (τ) doit être effectué manuellement, jusqu'à ce qu'un deuxième angle de commande limite (σ_42) soit à nouveau dépassé à la baisse et de ce fait le mode de fonctionnement automatique (301) de l'ajustement de l'angle d'assiette est à nouveau activé.

2. Procédé de commande d'un bateau selon la revendication 1, **caractérisé en ce que** le premier angle de commande limite à dépasser (σ_41) est supérieur au deuxième angle de commande limite (σ_42) à dépasser à la baisse.

3. Procédé de commande d'un bateau selon la revendication 1, **caractérisé en ce que** l'angle de commande limite ainsi que l'angle de commande ajustable au maximum (σ_L) sont déterminés en fonction de la vitesse (v) ou du régime (n) et à partir d'un tableau de valeurs ou d'une courbe caractéristique mémorisés dans l'unité de commande électronique (130), ou sont calculés conformément à une fonction mathématique.

4. Procédé de commande d'un entraînement d'un bateau selon la revendication 1, **caractérisé en ce que** les plages de conduite sont définies à chaque fois par une limite de régime supérieure et inférieure ou par une limite de vitesse supérieure et inférieure du bateau (100), le régime (n) se rapportant au régime d'un moteur (102), de la chaîne cinématique (125) ou de l'arbre d'hélice (106).

5. Procédé de commande d'un bateau selon la revendication 1, **caractérisé en ce que** l'angle de commande (σ_L) pouvant être ajusté au maximum n'est pas encore réduit dans une première plage de conduite (S1) qui s'étend depuis une première limite de régime jusqu'à une deuxième limite de régime, et est réduit linéairement avec l'augmentation de la vitesse (v) ou du régime (n) dans d'autres plages de conduite.

6. Procédé de commande d'un bateau selon la revendication 1, **caractérisé en ce que** l'angle de commande (σ_L) pouvant être ajusté au maximum est encore maximal dans une première plage de conduite (S1) et, dans chacune des plages de conduite suivantes à vitesse croissante, dans lesquelles l'ajustement automatique de l'angle d'assiette (τ) a lieu à chaque fois en fonction d'un autre mode de fonctionnement, l'angle de commande (σ_L) pouvant être ajusté au maximum reste constant dans chaque plage de conduite et diminue lors du passage à la plage de conduite suivante plus rapide.
